# EUROPEAN PATENT APPLICATION

(11) **EP 2 845 889 A1**
(43) Date of publication of application: **11.03.2015**
(21) Application number: 13784121.9
(22) Date of filing: 02.05.2013
(51) Int. Cl.: C09J 169/00, C09J 11/00

(54) **HOT-MELT ADHESIVE COMPOSITION HAVING LOW VISCOSITY**

(30) Priority: 04.05.2012 KR 20120047621; 27.06.2012 KR 20120068962; 30.04.2013 KR 20130048436
(71) Applicant: SK Innovation Co., Ltd., Seoul 110-110 (KR); SK Global Chemical Co., Ltd., Seoul 110-110 (KR)
(72) Inventor: PARK, Jae Young, Daejeon 305-712 (KR); HONG, Seung Gweon, Daejeon 305-728 (KR); OK, Myung Ahn, Daejeon 305-500 (KR); CHUNG, Kwang Jin, Daejeon 305-761 (KR)
(74) Representative: Stolmár & Partner
(86) International application number: PCT/KR2013/003814
(87) International publication number: WO 2013/165193

(57) **Abstract**

Provided is a hot-melt adhesive composition having a low viscosity, and more particularly, a hot-melt adhesive composition having a low viscosity, capable of being easily used at a low temperature by adding a viscosity lowering agent to a hot-melt adhesive composition containing an aliphatic polycarbonate obtained by copolymerization of carbon dioxide and one or more epoxide compounds to lower a viscosity while maintaining normal adhesive force.

## Description

### [Technical Field]

The present invention relates to a hot-melt adhesive composition having a low viscosity, and more particularly, to a hot-melt adhesive composition containing an aliphatic polycarbonate resin by copolymerization of carbon dioxide and one or more epoxide compounds and a viscosity lowering agent.

### [Background Art]

A hot-melt adhesive is an adhesive used by being melted by heat, and since the hot-melt adhesive emits less volatile organic solvent, use of the hot-melt adhesive as an eco-friendly adhesive has been increased. Recently, in an effort to prevent global warming as well as emission of a volatile organic compound harmful to human body, regulations has been institutionalized for environmental protection. As a part of the global effort, a use of a resin emitting less carbon dioxide, that is, resin having a low life cycle assessment (LCA) value has been preferably demanded. Polycarbonate is prepared using carbon dioxide as a raw material and the calculated LCA value thereof is about 1.3, which is a significantly low value as compared to other polymer resins such as polyethylene or polypropylene. Therefore, a method of reducing a carbon emission amount during a manufacturing process of the hot-melt adhesive may be provided by preparing the hot-melt adhesive using a polycarbonate resin.

In general, the hot-melt adhesive is a solid material at room temperature, but in the case of applying heat thereto, the hot-melt adhesive is melted in a fluid state such as a liquid, or the like, thereby having adhesive strength to an adherend, and in the case of cooling the hot-melt adhesive in a melted fluid state, the hot-melt adhesive is recovered in a solid state, thereby recovering cohesive force. Adhesive strength is affected by an anchor effect that a liquid adhesive flows through holes or unevenness of a surface to increase adhesive strength. In order to effectively use this effect, when the hot-melt adhesive is

melted, sufficient flowability is required. Therefore, the hot-melt adhesive is melted at a high temperature in order to obtain a suitable viscosity and then used.

A general hot-melt adhesive according to the related art mainly contains ethylene vinyl acetate (EVA) as a main ingredient and is composed of a tackifier for improving adhesive strength and wax for decreasing the viscosity. In ethylene vinyl acetate, generally, a ratio of vinyl acetate is 20 to 40 wt%, and as the tackifier, gum rosin, rosin ester, a C5 petroleum resin, a C9 petroleum resin, a coumarone resin, an acrylic modified petroleum resin, or the like, is used, and as the wax, paraffin wax, polyethylene wax, polypropylene wax, or the like, is used. When compatibility of the adhesive with wax and ethylene vinyl acetate is not good, it is impossible to effectively decrease the viscosity, a phase separation is generated at a use temperature to significantly decrease adhesive strength, and it is difficult to form a shape of the adhesive.

A hot-melt adhesive containing an ethylene-vinyl acetate copolymer, a styrene block copolymer, a tackifier resin, and a plasticizer has been disclosed in U.S. Patent Application Publication No. 2011-0229721 (Patent Document 1). However, this hot-melt adhesive according to the related art has adhesive strength to various materials, but does not have adhesive strength corresponding to adhesive strength of an epoxy or urethane adhesive, and flexibility and adhesive strength at a low temperature are low, such that there is a limitation in using the hot-melt adhesive as an adhesive for various uses.

Further, in the case of using an excessive amount of the plasticizer, compatibility with a base resin is not good, such that phase separation is generated at a use temperature, and a bleeding phenomenon occurs, such that adhesive strength may be decreased, and the viscosity is not decreased as much as desired.

Therefore, a hot-melt adhesive having sufficient flowability and high adhesive strength at a low melting temperature and high energy efficiency at the time of being used, and an eco-friendly low viscosity hot-melt adhesive composition that does not use a solvent depending on adhesive strength have been studied.

### [Related Art Document]

(Patent Document 1) U.S. Patent Application Publication No. 2011-0229721 (September 22, 2011)

### [Disclosure]

### [Technical Problem]

An object of the present invention is to provide a hot-melt adhesive composition having a low viscosity, capable of being easily handled at a low temperature by adding a viscosity lowering agent to a hot-melt adhesive composition containing an aliphatic polycarbonate resin obtained by copolymerization of carbon dioxide and one or more epoxide compounds different from each other to lower the viscosity while maintaining normal adhesive strength.

Another object of the present invention is to provide a hot-melt adhesive composition having a low viscosity capable of significantly decreasing a surface bleeding phenomenon and surface tackiness of an adhesive due to excellent compatibility between a polycarbonate resin and a viscosity lowering agent.

Another object of the present invention is to provide a hot-melt adhesive containing a hot-melt adhesive composition having a low viscosity.

### [Technical Solution]

In one general aspect, a hot-melt adhesive composition contains an aliphatic polycarbonate resin and a viscosity lowering agent.

The aliphatic polycarbonate resin may have a weight average molecular weight of 5,000 to 100,000g/mol, and the hot-melt adhesive composition may contain 5 to 100 parts by weight of the viscosity lowering agent based on 100 parts by weight of the aliphatic polycarbonate resin.

The aliphatic polycarbonate resin may be obtained by polymerizing carbon dioxide and one or more epoxide compounds different from each other, and the viscosity lowering agent may be a compound containing at least two benzoate groups.

The viscosity lowering agent may be one or two or more selected from compounds represented by the following Chemical Formula 1.

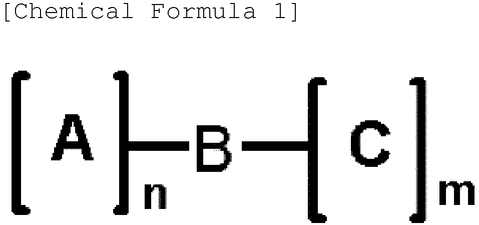

(In Chemical Formula 1, A and C are each independently 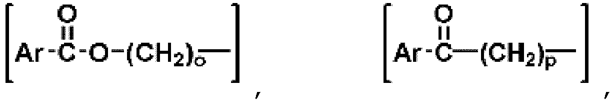 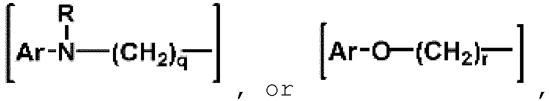
Ar is aryl, the aryl being further substituted with one or more selected from (C1-C7)alkyl, halogen, nitro cyano, hydroxyl, amino, (C6-C20)aryl, (C2-C7)alkenyl, or (C3-C20)cycloalkyl,
o, p, q, and r are each independently an integer of 1 to 10,
B is selected from (C1-C20)alkylene, (C3-C20)cycloalkylene, (C2-C20)alkenylene, (C6-C20)arylene, -O-, -NR-, 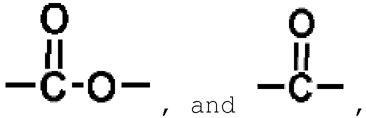
R is selected from hydrogen, (C1-C10)alkyl, (C6-C20)aryl, (C3-C20)cycloalkyl, and (C2-C7)alkenyl, and
n and m are each independently an integer of 1 to 3.)
More preferably, the viscosity lowering agent may be one or two or more selected from compounds represented by the following Chemical Formulas 2 to 6.

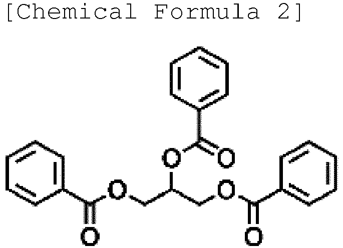

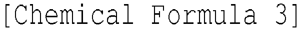

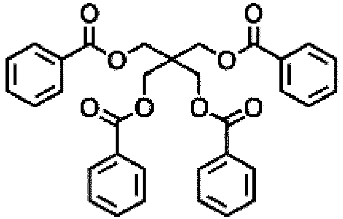

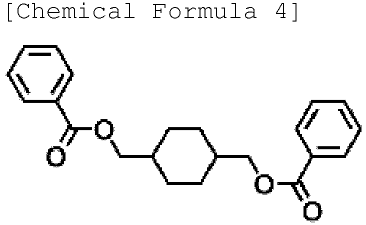

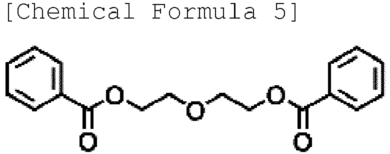

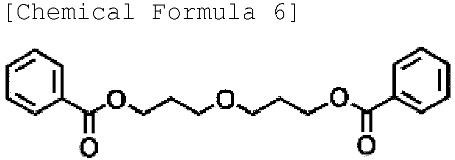

In another general aspect, a hot-melt adhesive contains the hot-melt adhesive composition as described above.

### [Advantageous Effects]

A hot-melt adhesive composition according to the present invention may be easily handled at a low temperature as compared to a hot-melt adhesive according to the related art and maintain normal adhesive strength by containing an aliphatic polycarbonate resin and a viscosity lowering agent to significantly lower a viscosity while decreasing a decrease in a glass transition temperature.

In addition, compatibility between the aliphatic polycarbonate resin and the viscosity lowering agent is excellent, such that a surface bleeding phenomenon and surface tackiness of an adhesive may be significantly decreased.

### [Description of Drawings]

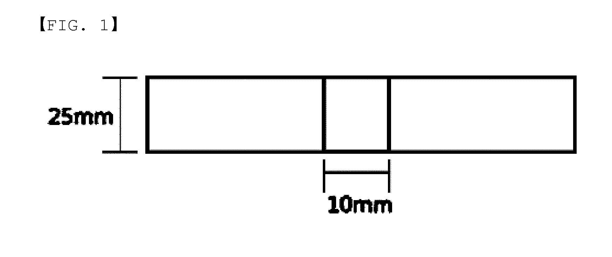

FIG. 1 shows a schematic configuration for measuring adhesive strength between an adherend and a hot-melt sample according to an exemplary embodiment of the present invention.

### [Best Mode]

Hereinafter, an exemplary embodiment of a hot-melt adhesive composition having a low viscosity according to the present invention and evaluation test items will be described in detail. Hereinafter, the present invention will be understood and appreciated more specifically from the following embodiments, and the embodiments are for illustrating the present invention and not for limiting the present invention defined by the accompanying claims.

The present invention relates to a hot-melt adhesive composition containing an aliphatic polycarbonate and a viscosity lowering agent, wherein the aliphatic polycarbonate is obtained by polymerizing carbon dioxide and one or more epoxide compounds different from each other.

The epoxide compound is one or more selected from a group consisting of (C2-C10)alkylene oxide substituted or unsubstituted with halogen or alkoxy; (C4-C20)cycloalkylene oxide substituted or unsubstituted with halogen or alkoxy; and (C8-C20)styrene oxide substituted or unsubstituted with halogen, alkoxy, alkyl, or aryl.

Specific examples of alkoxy may include (C1-C20)alkyloxy, (C6-C20)aryloxy, (C6-C20)ar(C1-C20)alkyl(aralkyl)oxy, and the like, and examples of aryloxy may include phenoxy, biphenyloxy, naphthyloxy, and the like. The alkoxy, alkyl, and aryl may have a substituent selected from halogen atoms or alkoxy groups.

In more detail, the aliphatic polycarbonate may be represented by the following Chemical Formula 7.

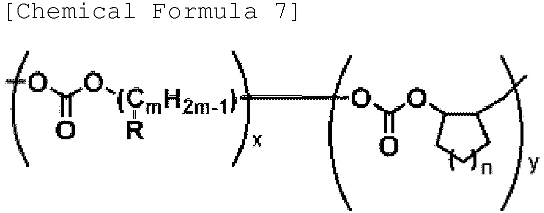

[In Chemical Formula 7, m is 2 to 10, n is 1 to 3, R is hydrogen, (C1-C4)alkyl or -CH₂-O-R' (R' is (C1-C8)alkyl), and a ratio of x:y is 5:95 to 99.99:0.01.]

In the present invention, specific examples of the epoxide compound may include ethylene oxide, propylene oxide, butene oxide, pentene oxide, hexene oxide, octene oxide, decene oxide, dodecene oxide, tetradecene oxide, hexadecene oxide, octadecene oxide, butadiene monoxide, 1,2-epoxide-7-octene, epifluorohydrin, epichlorohydrin, epibromohydrin, isopropyl glycidyl ether, butyl glycidyl ether, t-butyl glycidyl ether, 2-ethylhexyl glycidyl ether, allyl glycidyl ether, cyclopentene oxide, cyclohexene oxide, cyclooctene oxide, cyclododecene oxide, alpha-pinene oxide, 2,3-epoxide norbonene, limonene oxide, dieldrin, 2,3-epoxidepropylbenzene, styrene oxide, phenylpropylene oxide, stilbene oxide, chlorostilbene oxide, dichlorostilbene oxide, 1,2-epoxy-3-phenoxypropane, benzyloxymethyl oxirane, glycidyl-methylphenyl ether, chlorophenyl-2,3-epoxidepropyl ether, epoxypropyl methoxyphenyl ether, biphenyl glycidyl ether, glycidyl naphthyl ether, and the like.

The aliphatic polycarbonate may be polymerized by solution polymerization or bulk polymerization. In more detail, the aliphatic polycarbonate may be polymerized by injecting carbon dioxide in the presence of the epoxide compound and a catalyst using an organic solvent as a reaction medium.

As the solvent, one of aliphatic hydrocarbons such as pentane, octane, decane, cyclohexane, and the like, aromatic hydrocarbons such as benzene, toluene, xylene, and the like, and halogenated hydrocarbons such as chloromethane, methylene chloride, chloroform, carbon tetrachloride, 1,1-dichloroethane, 1,2-dichloroethane, ethyl chloride, trichloroethane, 1-chloropropane, 2-chloropropane, 1-chlorobutane, 2-chlorobutane, 1-chloro-2-methylpropane, chlorobenzene, bromobenzene, and the like, may be used alone, or a combination of at least two thereof may be used. A pressure of carbon dioxide may be in a range of normal pressure to 100 atm, preferably 5 to 30 atm. At the time of copolymerization reaction, a polymerization temperature may be in a range of 20 to 120°C, preferably 50 to 90°C. More preferably, bulk polymerization using a monomer itself as a solvent may be performed.

The aliphatic polycarbonate is a polyalkylene carbonate prepared based on technologies disclosed in Korean Patent Laid-Open Publication Nos. 2008-0015454, 2009-0090154, 2010-067593, and 2010-0013255, which were applied by the present applicant. Here, the alkylene includes ethylene, propylene, 1-butylene, cyclohexene, alkyl glycidyl ether, n-butyl, n-octyl, and the like, but is not limited thereto.

In addition, a molecular weight of the aliphatic polycarbonate resin is not limited, but as a more substantial example, a weight average molecular weight thereof is preferably 5,000 to 100,000, and more preferably, 10,000 to 100,000, which is effective in view of strong cohesive force and a low melting viscosity as a holt-melt adhesive. In the case in which the weight average molecular weight is more than 100,000, when the hot-melt adhesive composition is melt, a viscosity may be high, and in the case in which the weight average molecular weight is less than 5,000, cohesive force may be weak, such that adhesive strength may be decreased.

The hot-melt adhesive composition according to the present invention contains the viscosity lowering agent. It is preferable that the viscosity lowering agent is a compound containing at least two benzoate groups. More preferably, it is effective that the viscosity lowering agent is one or two or more selected from compounds represented by the following Chemical Formula 1.

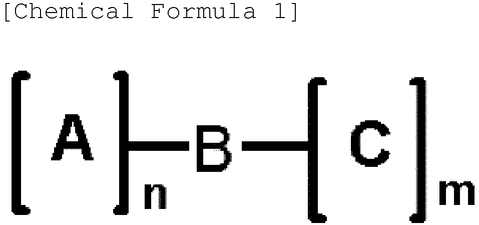

(In Chemical Formula 1, A and C are each independently 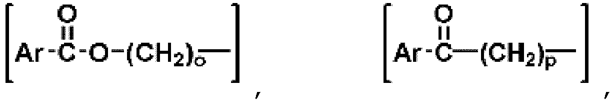 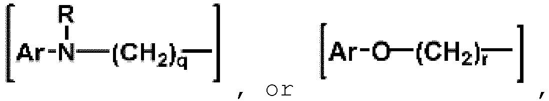
Ar is aryl, the aryl being further substituted with one or more selected from (C1-C7)alkyl, halogen, nitro cyano, hydroxyl, amino, (C6-C20)aryl, (C2-C7)alkenyl, or (C3-C20)cycloalkyl,
o, p, q, and r are each independently an integer of 1 to 10,
B is selected from (C1-C20)alkylene, (C3-C20)cycloalkylene, (C2-C20)alkenylene, (C6-C20)arylene, -O-, -NR-, 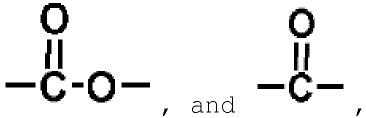
R is selected from hydrogen, (C1-C10)alkyl, (C6-C20)aryl, (C3-C20)cycloalkyl, and (C2-C7)alkenyl, and
n and m are each independently an integer of 1 to 3.)

As used herein, "alkylene" means a divalent linear or branched saturated hydrocarbon radical configured of only carbon and hydrogen atoms and includes methylene, ethylene, trimethylene, propylene, tetramethylene, pentamethylene, and the like, but is not limited thereto.

As used herein, "cycloalkylene" includes all of the saturated monocyclic and saturated bicyclic ring structures having 3 to 20 carbon atoms.

As used herein, "alkenylene" means a divalent linear or branched unsaturated hydrocarbon radical having a carbon atom and containing one or more double bonds and includes ethenylene, 2-propenylene, butenylene, pentenylene, and the like, but is not limited thereto.

As used herein, "arylene" is an organic radical derived from an aromatic hydrocarbon and may include a single or fused ring system containing, properly 4 to 7 ring atoms, and preferably 5 or 6 ring atoms in each ring. Specific examples of arylene include phenylene, naphthylene, biphenylene, and the like, but are not limited thereto.

Specific examples of the compound represented by Chemical Formula 1 may include compounds represented by the following Chemical Formulas 2 to 6, but are not limited thereto.

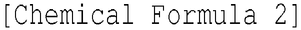

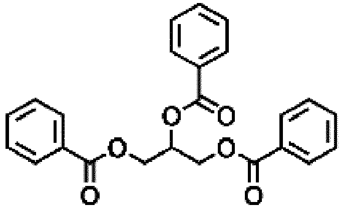

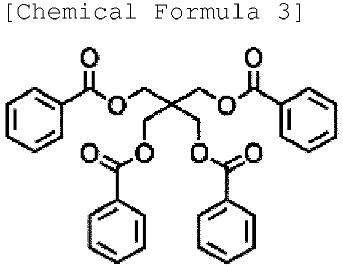

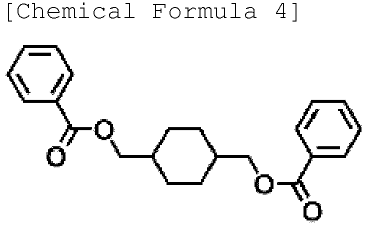

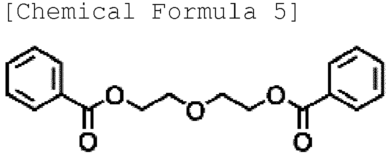

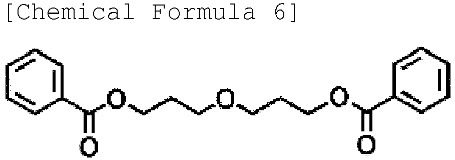

The viscosity lowering agent, which serves to lower the viscosity of the aliphatic polycarbonate resin, does not significantly decrease a glass transition temperature (Tg) of the aliphatic polycarbonate resin to thereby decrease a melting viscosity while decreasing surface tackiness, such that the hot-melt adhesive may be more easily handled at a low temperature as compared to a hot-melt adhesive according to the related art, and normal adhesive strength may be maintained.

In addition, the viscosity lowering agent has excellent compatibility with the aliphatic polycarbonate resin, such that a surface bleeding phenomenon and surface tackiness of the adhesive may be significantly decreased.

In accordance with the purpose of use, a content of the viscosity lowering agent may be suitably decreased or increased. In general, for example, the hot-melt adhesive composition may contain 5 to 100 parts by weight of the viscosity lowering agent based on 100 parts by weight of the aliphatic polycarbonate resin. Particularly, the hot-melt adhesive composition contains 10 to 50 parts by weight of the viscosity lowering agent, which is effective in view of increasing viscosity lowering efficiency in comparison to an addition amount. In the case in which the content of the viscosity lowering agent is less than 5 parts by weight, a viscosity lowering effect becomes insignificant, such that it may be difficult to handle the hot-melt adhesive composition due to a high viscosity at the time of melting the adhesive, and in the case in which the content is more than 100 parts by weight, the viscosity may be excessively decreased, and strength of the adhesive itself may be weakened, which is not preferable.

According to the present invention, when the viscosity lowering agent is contained in the above-mentioned content range in the aliphatic polycarbonate resin, it is preferable that the viscosity at 160°C is 8 to 50Pa·s and at the same time, a glass transition temperature (Tg) is 15 to 28°C. Within the above-mentioned range, compatibility with the aliphatic polycarbonate resin, the viscosity lowering agent, and other additives may be excellent, a glass transition temperature may be suitable for a hot-melt adhesive composition according to each purpose, and the viscosity is formed to be low, such that physical properties such as workability, an adhesion property, and the like, may be improved.

In addition, the hot-melt adhesive composition may further contain one or more additives selected from a tackifier resin, a plasticizer, wax, an antioxidant, an elastomer, a pigment, a dye, a filler, a UV blocker, an antistatic agent, an anti-blocking agent, a slip agent, an inorganic filler, a mixing agent, a stabilizer, a modified resin, a leveling agent, a fluorescent whitening agent, a dispersant, a heat stabilizer, a photo-stabilizer, a UV absorber, and a lubricant. Any additive may be used without limitations as long as it is apparently used in the art.

Further, according to the application purpose of the hot-melt adhesive, the above-mentioned additive may be suitably added, and a final viscosity and glass transition temperature of the hot-melt adhesive composition may be changed by the additionally added additive as described above. In view of improving workability and the adhesion property, it is effective that according to various purposes of the hot-melt adhesive, the viscosity at 160°C is preferably in a range of 0.7 to 20Pa·s and at the same time, a glass transition temperature (Tg) is in a range of -20 to 30°C.

The viscosity lowering agent used in the present invention may significantly lower the viscosity while not significantly affecting the glass transition temperature of the hot-melt adhesive composition, such that the hot-melt adhesive composition may be easily handled at a low temperature and adhesive strength may be maintained. The reason is that the hot-melt adhesive composition according to the present invention contains the viscosity lowering agent, such that the hot-melt adhesive composition may be easily handled at a low temperature and adhesive strength may be excellent by decreasing a decrease in the glass transition temperature (Tg) of the hot-melt adhesive composition and significantly lowering the viscosity thereof.

Hereinafter, Examples will be provided in order to describe the present invention in more detail. However, the present invention is not limited to the following Examples.

### [Example 1]

10 parts by weight of glycerol tribenzoate was added as a viscosity lowering agent to a polypropylene carbonate resin (SK Energy, GreenPolTM) having a weight average molecular weight of 30,000g/mol and stirred in a Brabender mixer at 160°C for 5 minutes, thereby preparing a hot-melt adhesive.

The viscosity of the prepared hot-melt adhesive was measured using a disk type viscometer (ARES) at 120, 140, 160, and 180°C (ω=10¹ and Strain =8%), respectively, and the results were shown in Table 1.

In addition, after adhering a hot-melt sample having a size of 25mm x 10mm between two adherends having a size of 25mm x 100mm at 160°C for 30 seconds as shown in FIG. 1, shear adhesive strength was measured using UTM. Measurement was performed at a test speed of 50mm/min, and the results were shown in Table 2.

In addition, the prepared adhesive was formed in a sheet form, and two sheets were stacked and left at 30°C for 6 hours. Thereafter, tackiness was confirmed, and it was confirmed that two sheets did not adhere to each other.

### [Example 2]

A hot-melt adhesive was prepared by the same method as that in Example 1 except that 20 parts by weight of the viscosity lowering agent of Example1 was used. In addition, the prepared adhesive was formed in a sheet form, and two sheets were stacked and left at 30°C for 6 hours. Thereafter, tackiness was confirmed, and it was confirmed that two sheets did not adhere to each other.

### [Example 3]

A hot-melt adhesive was prepared by additionally adding 30 parts by weight of a terpene based tackifier having a softening point of 115°C to the hot-melt adhesive of Example 2 and a disk shaped sample was prepared. A softening point was measured by a ring & ball test of putting on an iron ball on the test piece and measuring a temperature at which the iron ball penetrates through the sample to drop to the bottom while raising a temperature, and as a result, the softening point was 90°C. In addition, the prepared adhesive was formed in a sheet form, and two sheets were stacked and left at 30°C for 6 hours. Thereafter, tackiness was confirmed, and it was confirmed that two sheets did not adhere to each other.

### [Example 4]

A hot-melt adhesive was prepared by the same method as that in Example 1 except that 30 parts by weight of the viscosity lowering agent of Example1 was used. In addition, the prepared adhesive was formed in a sheet form, and two sheets were stacked and left at 30°C for 6 hours. Thereafter, tackiness was confirmed, and it was confirmed that two sheets did not adhere to each other.

### [Example 5]

A hot-melt adhesive was prepared by the same method as that in Example 1 except that pentaerythritol tetrabenzoate was used as the viscosity lowering agent. In addition, the prepared adhesive was formed in a sheet form, and two sheets were stacked and left at 30°C for 6 hours. Thereafter, tackiness was confirmed, and it was confirmed that two sheets did not adhere to each other.

### [Example 6]

A hot-melt adhesive was prepared by the same method as that in Example 1 except that 1,4-cyclohexane dimethanol dibenzoate was used as the viscosity lowering agent. In addition, the prepared adhesive was formed in a sheet form, and two sheets were stacked and left at 30°C for 6 hours. Thereafter, tackiness was confirmed, and it was confirmed that two sheets did not adhere to each other.

### [Example 7]

A hot-melt adhesive was prepared by the same method as that in Example 1 except that diethylene glycol dibenzoate was used as the viscosity lowering agent. In addition, the prepared adhesive was formed in a sheet form, and two sheets were stacked and left at 30°C for 6 hours. Thereafter, tackiness was confirmed, and it was confirmed that two sheets did not adhere to each other.

### [Example 8]

A hot-melt adhesive was prepared by the same method as that in Example 1 except that dipropylene glycol dibenzoate was used as the viscosity lowering agent. In addition, the prepared adhesive was formed in a sheet form, and two sheets were stacked and left at 30°C for 6 hours. Thereafter, tackiness was confirmed, and it was confirmed that two sheets did not adhere to each other.

### [Example 9]

A hot-melt adhesive was prepared by the same method as that in Example 1 except that 5 parts by weight of diethylene glycol dibenzoate and 5 parts by weight of dipropylene glycol dibenzoate were mixed and used as the viscosity lowering agent. In addition, the prepared adhesive was formed in a sheet form, and two sheets were stacked and left at 30°C for 6 hours. Thereafter, tackiness was confirmed, and it was confirmed that two sheets did not adhere to each other.

### [Comparative example 1]

A hot-melt adhesive was prepared by the same method as that in Example 1 except that the viscosity lowering agent was not used. In addition, the prepared adhesive was formed in a sheet form, and two sheets were stacked and left at 30 °C for 6 hours. Thereafter, tackiness was confirmed, and it was confirmed that two sheets did not adhere to each other.

### [Comparative example 2]

A hot-melt adhesive was prepared by the same method as that in Example 2 except for adding 20 parts by weight of glycerol carbonate laurate as a plasticizer instead of the viscosity lowering agent. In addition, the prepared adhesive was formed in a sheet form, and two sheets were stacked and left at 30°C for 6 hours. Thereafter, tackiness was confirmed, and it was confirmed that two sheets were detached from each other, but two sheets were significantly damaged due to a severe blocking phenomenon between two sheets.

### [Comparative example 3]

A hot-melt adhesive was prepared by the same method as that in Example 1 except for adding 20 parts by weight of dimethyl polyethylene glycol as a plasticizer instead of the viscosity lowering agent. In addition, the prepared adhesive was formed in a sheet form, and two sheets were stacked and left at 30°C for 6 hours. Thereafter, tackiness was confirmed, and it was confirmed that two sheets completely adhered to each other, such that two sheets were not detached from each other.

### [Comparative example 4]

A hot-melt adhesive was prepared by additionally adding 30 parts by weight of a terpene based tackifier (Dertophene T115, DRT) having a softening point of 115°C to the hot-melt adhesive of Example 3, and a softening point was measured by a ring & ball test. As a result, the softening point was 73°C. In addition, the prepared adhesive was formed in a sheet form, and two sheets were stacked and left at 30°C for 6 hours. Thereafter, tackiness was confirmed, and it was confirmed that two sheets completely adhered to each other, such that two sheets were not detached from each other.

### [Comparative example 5]

A hot-melt adhesive was prepared by the same method as that in Example 2 except for adding 20 parts by weight of PE wax (Lion-Chemtech 101N) as a plasticizer instead of the viscosity lowering agent. In addition, the prepared adhesive was formed in a sheet form, and two sheets were stacked and left at 30°C for 6 hours. Thereafter, tackiness was confirmed, and as a result, two sheets did not adhere to each other, but compatibility with the polypropylene carbonate was not good, such that a bleeding phenomenon was generated.

**[Table 1]**

| | Viscosity (Pa·s) | | | | Tg (°C) |
|---|---|---|---|---|---|
| | 120°C | 140°C | 160°C | 180°C | |
| Example 1 | 269 | 77 | 31 | 15 | 26.17 |
| Example 2 | 116 | 37 | 16 | 8 | 23.26 |
| Example 4 | 64 | 22 | 10 | 5 | 19.86 |
| Example 5 | 248 | 60 | 25 | 12 | 25.2 |
| Example 6 | 290 | 90 | 50 | 18 | 27.82 |
| Example 7 | 260 | 80 | 32 | 15 | 26.73 |
| Example 8 | 257 | 76 | 29 | 13 | 24.3 |
| Example 9 | 258 | 78 | 31 | 14 | 25.4 |
| Comparative Example 1 | 596 | 159 | 60 | 27 | 33.7 |
| Comparative Example 2 | 49 | 18 | 9 | 5 | 12.69 |
| Comparative Example 3 | 45 | 19 | 10 | 6 | -6.28 |

**[Table 2]**

| | Shear Adhesive strength (Kgf) | | | | |
|---|---|---|---|---|---|
| | Steel | Wood | Glass | Polycarbonate | Polyurethane |
| Example 2 | 85.3 | 82.8 | 16.27 | 18.34 | 22.18 |
| Comparative Example 1 | 78.2 | 80.32 | 11.14 | 13.29 | 19.26 |
| Comparative Example 3 | 58.3 | 77.2 | 6.7 | 6.9 | 12.2 |
| Comparative Example 5 | 9.2 | 40.3 | 4.8 | 4.2 | 6.5 |

As shown in Tables 1 and 2, it may be appreciated that in Examples 1 to 9 according to the present invention, the glass transition temperature was slightly decreased, but the viscosity was significantly changed by adding the viscosity lowering agent, as compared to Comparative Example 1.

Further, in the cases of Comparative Examples 2 and 3, the viscosity was decreased as compared to the Examples, but the surface was significantly tacky at the time of forming the hot-melt adhesive, such that it may be appreciated that the glass transition temperature was excessively decreased.

Furthermore, in the case of Comparative Example 5, since compatibility of the PE wax with the polypropylene carbonate resin was not good, the bleeding phenomenon was generated on the surface, such that it may be appreciated that adhesive strength was entirely decreased.

Therefore, according to the present invention, the hot-melt adhesive composition capable of being used at a low temperature and exhibiting sufficient adhesive strength by having a suitable temperature range at a use temperature, having a softening point of about 90°C, and decreasing a melting temperature may be provided.

## Claims

1. A hot-melt adhesive composition comprising an aliphatic polycarbonate resin and a viscosity lowering agent.

2. The hot-melt adhesive composition of claim 1, wherein the aliphatic polycarbonate resin is obtained by polymerizing carbon dioxide and one or more epoxide compounds different from each other.

3. The hot-melt adhesive composition of claim 1, wherein the aliphatic polycarbonate resin has a weight average molecular weight of 5,000 to 100,000g/mol.

4. The hot-melt adhesive composition of claim 1 or 3, wherein it contains 5 to 100 parts by weight of the viscosity lowering agent based on 100 parts by weight of the aliphatic polycarbonate resin.

5. The hot-melt adhesive composition of claim 4, wherein the viscosity lowering agent is a compound containing at least two benzoate groups.

6. The hot-melt adhesive composition of claim 5, wherein the viscosity lowering agent is one or two or more selected from compounds represented by the following Chemical Formula 1. 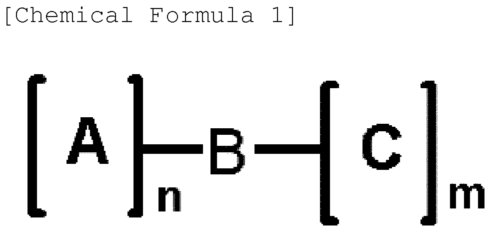 (In Chemical Formula 1, A and C are each independently 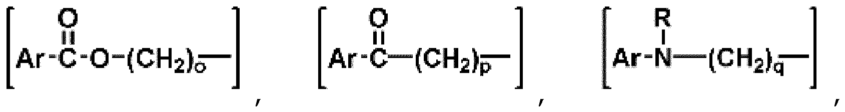 or 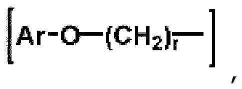
Ar is aryl, the aryl being further substituted with one or more selected from (C1-C7)alkyl, halogen, nitro cyano, hydroxyl, amino, (C6-C20)aryl, (C2-C7)alkenyl, or (C3-C20)cycloalkyl,
o, p, q, and r are each independently an integer of 1 to 10,
B is selected from (C1-C20)alkylene, (C3-C20)cycloalkylene, (C2-C20)alkenylene, (C6-C20)arylene, -O-, -NR-, 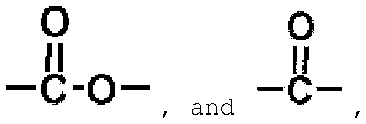
R is selected from hydrogen, (C1-C10)alkyl, (C6-C20)aryl, (C3-C20)cycloalkyl, and (C2-C7)alkenyl, and
n and m are each independently an integer of 1 to 3.)

7. The hot-melt adhesive composition of claim 5, wherein the viscosity lowering agent is one or two or more selected from compounds represented by the following Chemical Formulas 2 to 6.

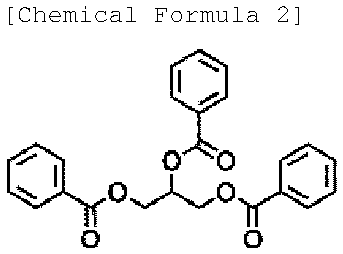

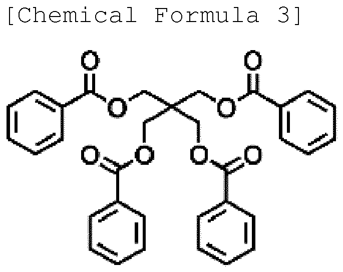

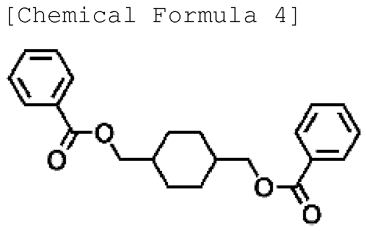

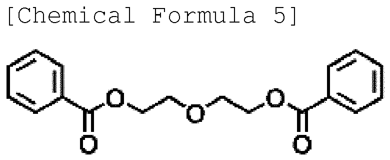

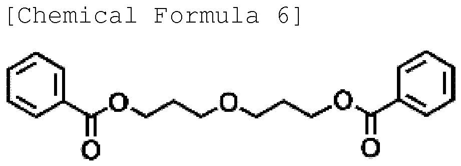

8. The hot-melt adhesive composition of claim 1, wherein it has a viscosity of 8 to 50Pa·s at 160°C and a glass transition temperature (Tg) of 15 to 28°C.

9. The hot-melt adhesive composition of claim 1 or 3, further comprising one or two or more additives selected from a tackifier resin, a plasticizer, wax, an antioxidant, an elastomer, a pigment, a dye, a filler, a UV blocker, an antistatic agent, an anti-blocking agent, a slip agent, an inorganic filler, a mixing agent, a stabilizer, a modified resin, a leveling agent, a fluorescent whitening agent, a dispersant, a heat stabilizer, a photo-stabilizer, a UV absorber, or a lubricant.

10. The hot-melt adhesive composition of claim 9, wherein it has a viscosity of 0.7 to 20Pa·s at 160°C and a glass transition temperature (Tg) of -20 to 30°C.

11. A hot-melt adhesive comprising the hot-melt adhesive composition of any one of claims 5 to 7.
